# EUROPEAN PATENT SPECIFICATION

(11) **EP 0 632 252 B1**
(45) Date of publication and mention of the grant of the patent: **16.09.1998**
(21) Application number: 94108257.0
(22) Date of filing: 27.05.1994
(51) Int. Cl.: G01C 21/20, G08G 1/0968

(54) **Navigation system**
Navigationssystem
Système de navigation

(30) Priority: 28.05.1993 JP 151318/93
(43) Date of publication of application: 04.01.1995
(73) Proprietor: AISIN AW CO., LTD., Anjo-shi Aichi 444-1192 (JP)
(72) Inventor: Morimoto,Kyomi, Nishio-shi,Aichi 445 (JP); Yokoyama,Shoji, Anjo-shi,Aichi 446 (JP)
(74) Representative: VOSSIUS & PARTNER

(56) References cited:
- EP-A- 0 505 152
- WO-A-89/06399
- WO-A-90/02391
- DE-A- 4 219 171

## Description

The present invention relates to a navigation system for guiding a user to a destination via a predetermined route and, more particularly, to a navigation system having a function to set point data by inputting the absolute coordinates by operations or through communications.

### Related Art

The navigation system guides the user a route so that he or she can visit a first destination safely by car. In recent years, the technology for improving the performances or functions such as the precision, operability or visibility of navigation has been vigorously developed, and a variety of types have been proposed. This navigation system is equipped with a display screen to be used for setting the route and a display screen to be opened automatically or in response to a demand of the driver when the route is to be guided. The display screen after the guide start is formed with a section diagram covering a wide range of several sections including a plurality of sections set with the route and the section, in which the automobile is running, and an intersection diagram for guiding the driver at road intersections.

Some navigation systems provide the information the residual distance, name and right or left turn of the intersection, at which the automobile should turn to follow the correct route, teach the characteristics, by which the driver can confirm the route in his or her course, and make not only a display but also a guide by a voice.

In this navigation system, the starting point and the destination have to be inputted so as to set the route. When the starting point and the destination are determined by this inputting, the route is searched for from the neighborhoods of the starting point and the destination and the road information data inbetween so that the optimum route is selectively set from a plurality of routes. For example, there have been proposed : a system in which the target position registered such as the starting point or the destination is classified according to the sight - seeing, the parking zones or restaurants and is coded according to the areas such as the prefectures or cities so that the data are inputted in terms of the codes; a system in which menus are displayed so that they may be sequentially selectively inputted; a system in which node data are connected to define a road net so that the position is inputted in terms of the east longitude and north latitude coordinates ; and a system in which the telephone number is inputted.

This kind of system is exemplified by the telephone number inputting system, as disclosed in Japanese Patent Laid - Open No. 187898/1990, and a classification or code number inputting system, as disclosed in Japanese Patent Laid - Open No. 173820/1989. In Japanese Patent Laid - Open No. 1738223/1989, on the other hand, there is disclosed a system in which a destination is set in terms of code numbers and which is equipped with coordinate data of destinations as the destination information.

However, the destination inputting system of the prior art cannot set the destination the driver desires to go to. In case, for example, the destination is to be set to the house of a friend, the telephone number of the friend has to be registered according to the telephone number inputting system. However, it frequently occurs that the telephone number of the friend's house is not registered. Thus, the map is displayed as a representative point of the area covering the friend's house where the local office number coincides. This naturally results in that the displayed map covers such a wide area as can hardly allow the user to identify the friend's house. If this difficulty is to be eliminated, it is sufficient to register the telephone number of the friend's house, but the amount of data increases so much that the cost rises extremely high.

On the other hand, the code number inputting system can set the destination precisely. In order to allow the user to set a number of unspecified destinations such as the friend's house, however, the unspecified destinations have to be coded one by one. When the data codes are inputted, they have to be converted into the point information. Then, there arises a problem that the user has to pay the costs for the encoding process and for the device for storing those data.

WO-89/06399 discloses an in-vehicle storage device (ROM 82) which stores destination/position co-ordination data.

An object of the present invention is to provide a navigation system which is enabled to set a number of unspecified destinations by a simple construction. The invention is defined in the appended claims 1-11.

The point coordinate data of the destination are acquired from the coordinate list, the map or the information center, and the point coordinates are inputted in the screen or by the voice through the operations or communications of the user. Then, the point setting is processed in a manner to correspond to the destination so that the inputted point is displayed in the screen.

According to the construction of the present invention, the destination data to be stored in the existing navigation system can be eliminated to require neither the space for storing the data nor the memory space for storing the data temporarily in the central control section so that the structure can be made compact.

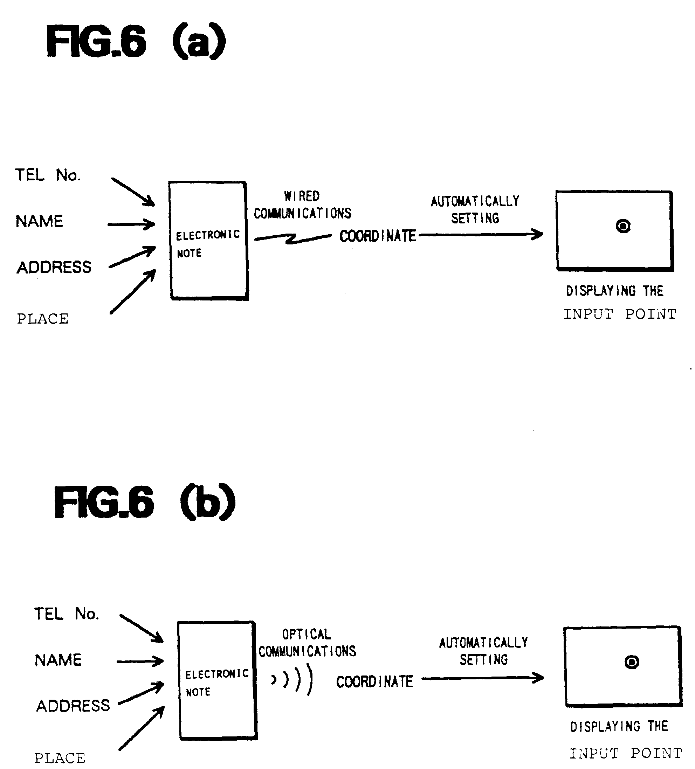

In case the information center is used, the user is freed from the trouble of the search which might otherwise be performed by the user so that no irritation is given to the user while shortening the searching time period. In the inputting case through the communications, moreover, no man power is required to simply the setting operation.
Fig. 1 is a block diagram showing one embodiment of a system construction of a navigation system according to the present invention;
Fig. 2 is a diagram showing a system construction for setting point coordinates by a screen input or a voice input;
Fig. 3 is a diagram showing a system construction for operation inputting or automatic setting on the basis of the point coordinate information which is sent from an information center in response to an inquiry of a user;
Fig. 4 is a diagram showing one example of a coordinate list collecting telephone numbers, addresses, names and places corresponding to absolute coordinates ; and
Fig. 5 is a diagram showing a schematic construction of a map illustrating the absolute coordinates.
Of Figs. 6 (a) and 6 (b) showing system constructions for automatically setting the point coordinate data, which are stored in an electronic note, by inputting destination data to send the point coordinate data to the navigation system, Fig. 6 (a) shows a system construction using wired communications, and Fig. 6 (b) shows a system construction using optical communications.

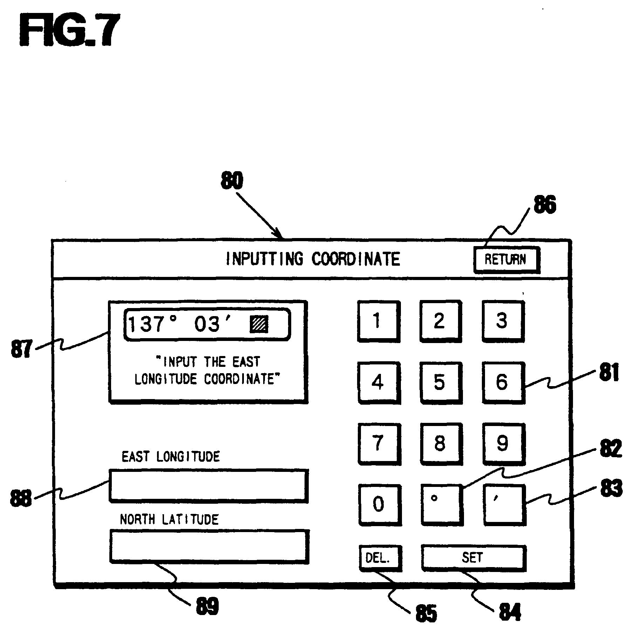

Fig. 7 is a diagram showing one example of the layout of a coordinate inputting screen ; and

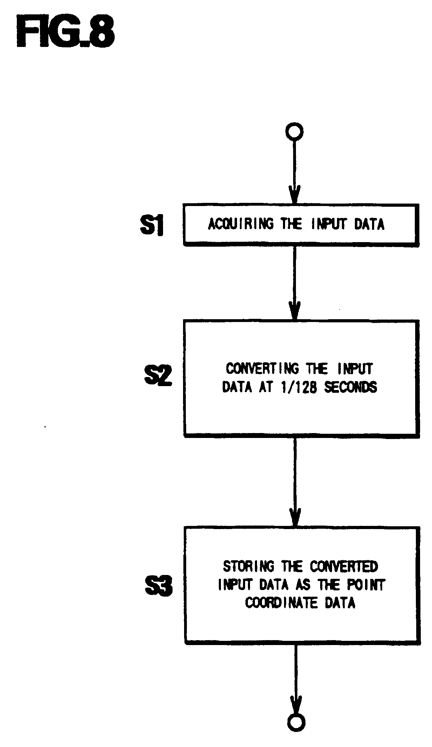

Fig. 8 is a flow chart showing a procedure for setting the point coordinate data.

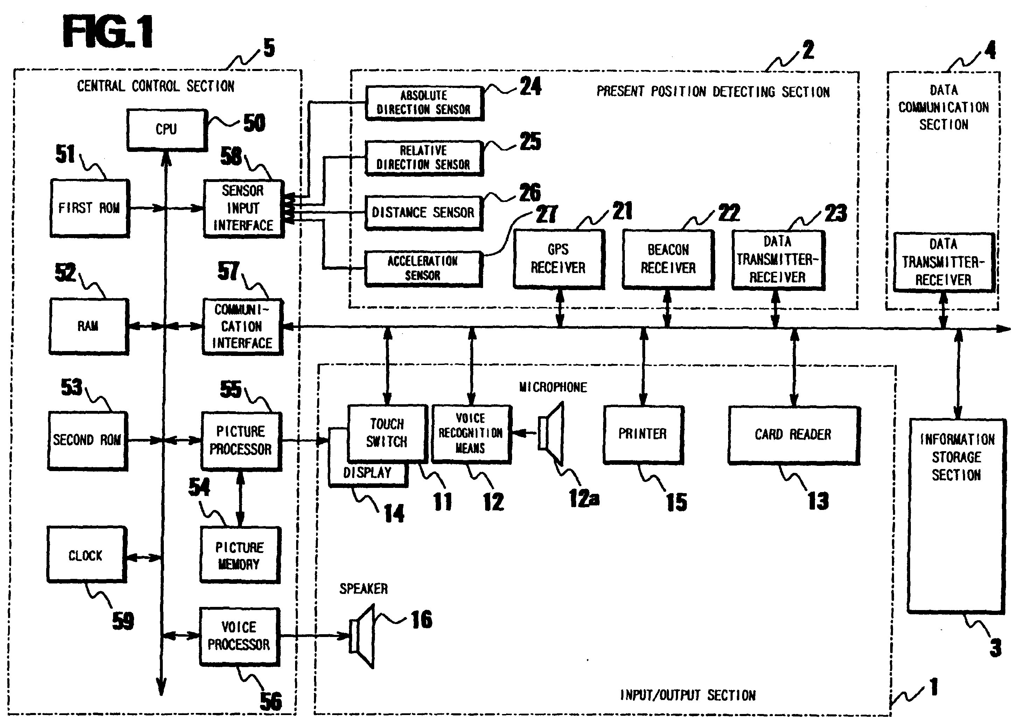

Here will be described the present invention in connection with its embodiments with reference to the accompanying drawings. Fig. 1 shows a system construction of a navigation system having a function to set a point using absolute coordinates.

The navigation system is constructed to include : an input/output section 1 for inputting/outputting information concerning a route guide; a present position detecting section 2 for detecting information concerning the present position of an automobile ; an information storage section 3 for storing a navigation data necessary for calculating the route and a display guide data necessary for the guide ; a data communication section 4 for sending/receiving the navigation data with an information source such as an information center or an electronic note ; and an central control section 5 for processing a route search and a display/guide necessary for the route guide and for controlling the entire system.

The input/output section 1 is given functions to instruct the central control section 5 the navigation processing according to the intention of the user so that the guide information may be given by voice and/or displayed on the screen when requested by the driver, and to output the processed data or the data of data communications to a printer. In order to realize these functions, the input section is composed of : a touch switch 11 for inputting a destination in terms of telephone numbers or coordinates or requesting a route guide; a voice recognition unit 12; a card reader 13 for reading the data recorded in an IC card or a magnetic card. On the other hand, the output section is composed of : a display 14 for displaying the input data on the screen or for displaying the route guide on the screen in response to the request of the driver or in an automatic manner; a printer 15 for printing the data processed by the central control section 5, the data stored in the information storage section 3, or the communication data sent from the information center or the like; and a speaker 16 for outputting the route guide in a voice.

Moreover, the data communication section 4 performs the data transmissions with the external information center in response to the request of a user by storing massive route guide information and the data transmissions for inputting the point coordinates by using the destination information which is stored in advance by the user in the information storing media (i.e., the digital data storing means) such as the electronic note or the IC card. Here, the data communication section 4 has a data transmission section composed of such various communication means according to the system specifications as is exemplified in the present embodiment by a radio - wave transmitter 4a, a radio - wave receiver 4b, a wired communication receiver 4c and an optical communication receiver 4d.

The display 14 is constructed of a color CRT or a color liquid crystal display and is displayed in colors with both all the screens necessary for the navigations such as the route setting screen, the section screen or the road intersection screen based upon the map data or the guide data processed by the central control section 5, and buttons for setting the route guide, guiding the route and switching the screen. Especially, the information of the intersection being passed such as the name of the intersection is temporarily popped up in colors in the section screen.

This display is mounted in the instrument panel near the driver's seat so that the driver can look into the section diagram to confirm the present place of the automobile and acquire the information on the route to follow. On the other hand, the display 14 is equipped with the touch switch 11 corresponding to the indications of function buttons so that the aforementioned operations are executed on the basis of the signals inputted by the touch switch 11. The input signal generating means thus composed of the touch switch and so on constitutes the input section, the detailed description of which will be omitted.

The voice recognition means 12 constitutes the input signal generating means for generating a signal to be processed by the central control section 5 after it has recognized the coordinate information to be inputted by the voice of the user through a microphone 12a.

The present position detecting section 2 is constructed to include: a GPS receiver 21 utilizing the global positioning system (GPS) ; a beacon receiver 22 ; a data transmitter-receiver 23 for receiving the corrected signal of the GPS utilizing the cellular phone or FM multiplex signals; an absolute direction sensor 24 composed of a terrestrial magnetism sensor; a relative direction sensor 25 composed of a wheel sensor or a steering sensor; a distance sensor 26 for detecting the covered distance from the number of revolutions of the wheels and an acceleration sensor 27.

The information storage section 3 is a data base stored with all the data including the map data, the display guide data and the voice guide data that are necessary for the route guide.

The central control section 5 is constructed to include: a CPU 50 for executing arithmetic operations; a first ROM 51 stored with programs for searching routes, programs for display controls necessary for the route guide and for voice output controls necessary for the voice guide, and the data necessary for the programs; a RAM 52 for latching the guide guide information searched and the data being processed ; a second ROM 53 stored with the display information data necessary for the route guide and the map display; a picture memory (V - RAM) 54 stored with the picture data to be used for displaying a picture; a picture processor (display controller) 55 for fetching the picture data from the picture memory on the basis of the display control signal coming from the CPU and for processing the picture and outputting the processed picture to the display; a voice processor 56 for synthesizing and converting the voice, phrase, sentence and sound, which are read out of the information storage section 3, into analog signals on the basis of the voice output control signal coming from the CPU and for outputting the analog signals to the speaker ; a communication interface 57 for transferring the input/output data through communications ; a sensor input interface 58 for fetching the sensor signal of the present position detecting section 3; and a clock 59 for inputting the data and time in an internal dialogue information. Here, the driver can select the route guide from either the screen display or the voice output.

The present system determines the present position by calculating a deduced position on the basis of the various sensor signals and the GPS data coming from the present position detecting section 3 and by determining the position on the road from the correlations between the deduced position, and the road on the map and the GPS data. Here, the present position is not indicated on the road displayed on the map if the correlation with the road data displayed on the map is poor.

The present system is further given a function to decide whether a predetermined guide point is approached by the running position of the automobile of the driver, in view of the route from the present position to the destination. Specifically this function decides the timing for outputting the predetermined distance before the road intersection on the guide route and the passage of the intersection automatically in a voice and for outputting the intersection information such as the name of intersection passed. On the basis of this decision result, the system instructs the picture processor and the voice processor the guide. In response to the input of the request signal, moreover, the system instructs the voice processor the voice guide of the present position.

Here will be described the point setting function according to the absolute coordinates of the present invention. The acquisition of the point coordinates of the destination can utilize the memory means such as the coordinate list, the map, the information center and the electronic note. Moreover, the point coordinate information acquired is set in the navigation system by inputting it in the screen or by a voice or automatically set by executing the point setting program.

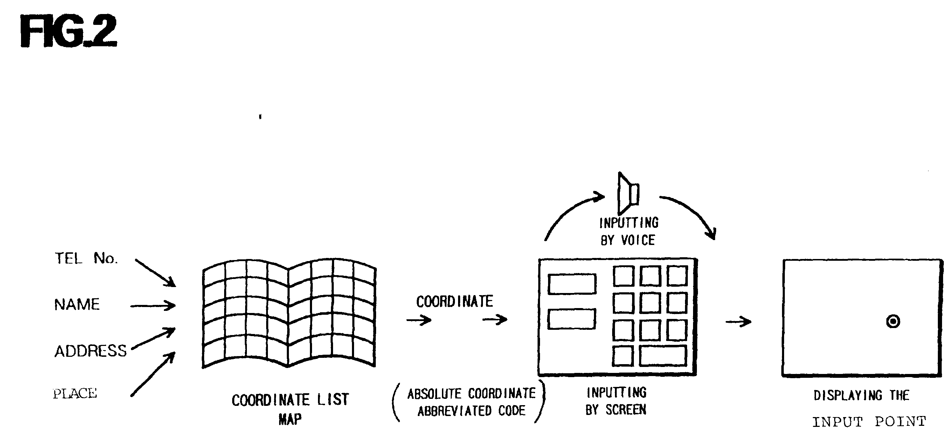

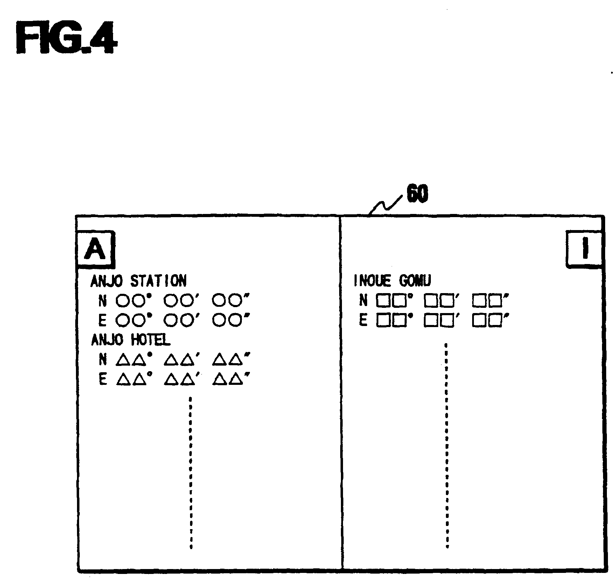

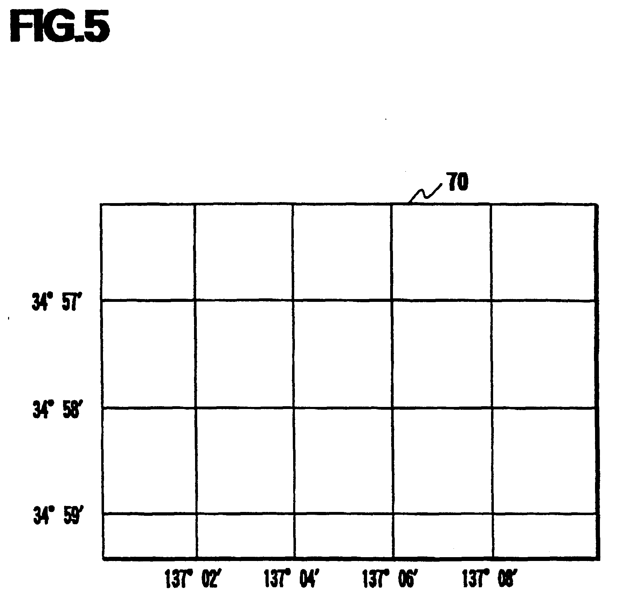

Fig. 2 shows a system construction for setting the point coordinates by the screen or voice inputting. First of all, the point coordinates of the destination are acquired referring to the coordinate list stored with the telephone number, the address, the name or the plate corresponding to the absolute coordinates, such as the coordinate list stored with the absolute coordinates corresponding to the place, as shown in Fig. 4, or the map written with the absolute coordinates, as shown in Fig. 5. When the point coordinates of the destination are acquired, they are inputted in the screen or by the voice. The central control section determines the point from the map data stored in the information storage section on the basis of the coordinate information of the destination inputted and displays it in the map screen. Incidentally, the point coordinates of the destination may be inputted by preparing and using the abbreviated codes such as the G codes in the coordinate list or the map.

According to the present embodiment, the existing information source such as the map can be easily utilized by the inputting operations.

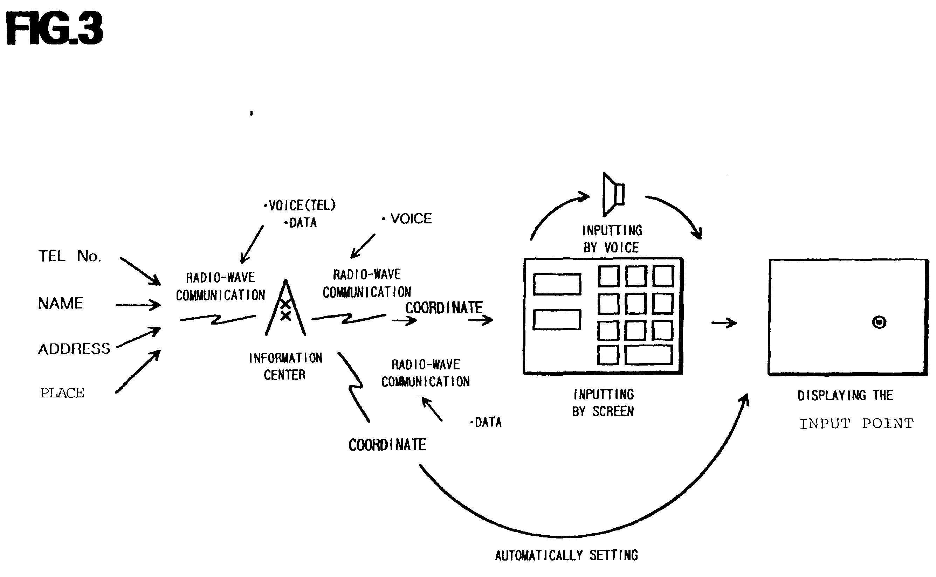

Fig. 3 shows a system construction for the operation inputting or automatic setting on the basis of the point coordinate information sent from the information center in response to the inquiry of the user.

The information center is usually placed as a stationary station and given functions to store the data necessary for the navigation and to issue the necessary data in response to a demand of the user. The user sends the destination information such as the telephone number, the name, the address and the place to the information center through a voice telephone or data by making use of the radio-wave communications. The user is taught the demanded point coordinate data from the information center by the telephone and inputs the point coordinate data by a voice or in the screen. Alternatively, the system receives the coordinate data sent from the information center through the receiver and processes it to indicate the point if it is provided with a function to automatically set the coordinate data received by the navigation system.

Fig. 6 present system constructions for sending the coordinate data stored in the electronic note by inputting the destination data to the navigation system by the wired communications, as shown in Fig. 6 (a), and by the optical communications, as shown in Fig. 6 (b), to set the coordinate data automatically.

The electronic note is a portable data base composed mainly of input means for the destination data, memory means stored with the coordinate data corresponding to the destination data, and communication means for transmitting the coordinate data. Incidentally, the portable data base to be used can be exemDlified by the record card such as the IC card or the magnetic card. In this modification, the input/ output section is equipped with the card reader.

The communication means either transmits the coordinate data by connecting the electronic note shown in Fig. 6 (a) and the navigation system through the communication cable cr arranges light emitting means at the side of the electronic note, as shown in Fig. 6 (b), and light receiving means at the side of the navigation system to convert the point coordinate data into optical data and transmit the optical data.

In case the point coordinates of the destination are to be set, the coordinate data are outputted to the navigation system when the destination data are inputted to the electronic note. Then, the navigation system indicates the point from the coordinate data inputted.

Here will be described the input screen of the coordinates. Fig. 7 shows one example of the layout of the coordinate input screen. This input screen is opened by depressing the coordinate input button after the destination setting button has been depressed in the menu of the destination setting screen, although not shown.

A coordinate input screen 80 is formed with : ten keys 81 for inputting the coordinate data; a degree key 82 and a minute key 83 for selecting the inputs of the longitude and latitude; a set completing key 84 for fixing the data after the coordinates have been inputted; a delete key 85 for deleting the input data ; a return key 86 for returning the screen (i.e., the destination setting screen) preceding the present screen; a monitor area 87 for displaying the coordinate data being inputted; and an east longitude indication area 88 and a north latitude indication area 89 for indicating the east longitude and the north latitude coordinates inputted. In the present example, the monitor area 87 is displayed with the message for instructing the inputting, e.g., "Input the east longitude coordinate" at the time of inputting the east longitude coordinate.

Here will be described the setting of the point coordinate data with reference to Fig. 8. When the input data as the point coordinate information is acquired (at S1) either by the operation inputting in the screen or by the voice or by the communication inputting by the radio-wave communications or the optical communications, the point coordinate values are converted at a predetermined unit such as 1/128 seconds (at S2). The input data thus converted are stored as the point coordinate data (at S3). Then, the point is indicated on the map by processing the point indication of the destination.

## Claims

1. A navigation system for providing guidance to a destination along a route, as presently selected, comprising:
a) memory means (3) for storing map information relating to point coordinate data,
b) destination setting means (11, 12, 12a, 13, 15) for setting the destination,
c) arithmetic processor means (5) for processing to provide a route guidance toward the destination as set by said destination setting means,
characterized by
d) communication means (4) for transmitting input destination information to a remote external storage medium separate from the navigation apparatus and receiving point coordinate data of said destination from said external storage medium, wherein
e) said arithmetic processor means (5) is for providing route guidance on the basis of said received point coordinate data.

2. A navigation system according to claim 1, characterized in that said external storage medium is a recording medium for storing therein the destination information and the corresponding point coordinate data and for sending forth certain point coordinate data correspcnding to the destination information upon receipt of the destination information.

3. A navigation system according to claim 2, characterized in that said recording medium is an information center.

4. A navigation system according to claim 2, characterized in that said recording medium is a portable recording medium.

5. A navigation system according to claim 4, characterized in that said portable recording medium is an IC card or magneti card.

6. A navigation system according to any of claims 1 to 5, characterized in that said point coordinate data includes geographical coordinates.

7. A navigation system according to any of claims 1 to 6, characterized in that said point coordinates are made of abbreviated codes of said coordinates.

8. A navigation system according to any of claims 1 to 7, characterized in that an inputting screen (80) for inputting said point coordinate data is provided which includes at least a key (82,83) for inputting the longitude and the latitude, and a display area (14) for indicating the east longitude coordinate and the north latitude coordinate input.

9. Method for guiding a user to a destination in accordance with a predetermined route comprising the steps:
a) Inputting a destination information into a navigation system,
b) Providing route guidance to said destination by said navigation system on the basis of said point coordinate data,
characterized in that between steps a) and b) the following steps are performed
a₁) Transmitting said destination information to a remote external storage medium separate from the navigation apparatus,
a₂) Receiving point coordinate data of said destination from said external storage medium,
a₃) Inputting said point coordinate data into said navigation system by a user or automatically.

10. Method according to claim 9, characterized in that in step a) the destination information is input by voice or manually.

11. Method according to claims 9 or 10, characterized in that in step a₃) the point coordinate data are input by the user manually or by voice.

## Patentansprüche

1. Navigationssystem zum Bereitstellen einer Leitung zu einem Ziel auf einer Route gemäß einer aktuellen Auswahl mit:
a) einer Speichereinrichtung (3) zum Speichern von Karteninformationen im Zusammenhang mit Punktkoordinatendaten,
b) einer Zieleinstelleinrichtung (11, 12, 12a, 13, 15) zum Einstellen des Ziels,
c) einer Arithmetikprozessoreinrichtung (5) zum Verarbeiten, um eine Routenleitung zu dem Ziel gemäß der Einstellung durch die Zieleinstelleinrichtung bereitzustellen,
gekennzeichnet durch:
d) eine Kommunikationseinrichtung (4) zum Übertragen von Eingabezielinformationen zu einem entfernten externen Speichermedium, das von der Navigationsvorrichtung getrennt ist, und Empfangen von Punktkoordinatendaten des Ziels von dem externen Speichermedium, wobei
e) die Arithmetikprozessoreinrichtung (5) zum Bereitstellen einer Routenleitung auf der Grundlage der empfangenen Punktkoordinatendaten dient.

2. Navigationssystem nach Anspruch 1, dadurch gekennzeichnet, daß das externe Speichermedium ein Aufzeichnungsmedium zum Speichern der Zielinformationen und der entsprechenden Punktkoordinatendaten sowie zum Absenden bestimmter Punktkoordinatendaten, die den Zielinformationen entsprechen, bei Empfang der Zielinformationen ist.

3. Navigationssystem nach Anspruch 2, dadurch gekennzeichnet, daß das Aufzeichnungsmedium ein Informationszentrum ist.

4. Navigationssystem nach Anspruch 2, dadurch gekennzeichnet, daß das Aufzeichnungsmedium ein tragbares Aufzeichnungsmedium ist.

5. Navigationssystem nach Anspruch 4, dadurch gekennzeichnet, daß das tragbare Aufzeichnungsmedium eine IC-Karte oder Magnetkarte ist.

6. Navigationssystem nach einem der Ansprüche 1 bis 5, dadurch gekennzeichnet, daß die Punktkoordinatendaten geographische Koordinaten aufweisen.

7. Navigationssystem nach einem der Ansprüche 1 bis 6, dadurch gekennzeichnet, daß die Punktkoordinaten aus Abkürzungscodes der Koordinaten bestehen.

8. Navigationssystem nach einem der Ansprüche 1 bis 7, dadurch gekennzeichnet, daß ein Eingabebildschirm (80) zum Eingeben der Punktkoordinatendaten vorgesehen ist, der aufweist: mindestens eine Taste (82, 83) zum Eingeben der geographischen Länge und Breite sowie einen Anzeigebereich (14) zum Anzeigen der eingegebenen östlichen Längenkoordinate und nördlichen Breitenkoordinate.

9. Verfahren zum Leiten eines Benutzers zu einem Ziel gemäß einer vorbestimmten Route mit den folgenden Schritten:
a) Eingeben von Zielinformationen in ein Navigationssystem,
b) Bereitstellen einer Routenleitung zu dem Ziel durch das Navigationssystem auf der Grundlage der Punktkoordinatendaten,
dadurch gekennzeichnet, daß zwischen den Schritten a) und b) die folgenden Schritte durchlaufen werden:
a₁) Übertragen der Zielinformationen zu einem entfernten externen Speichermedium, das von der Navigationsvorrichtung getrennt ist,
a₂) Empfangen von Punktkoordinatendaten des Ziels von dem externen Speichermedium,
a₃) durch einen Benutzer oder automatisch erfolgendes Eingeben der Punktkoordinatendaten in das Navigationssystem.

10. Verfahren nach Anspruch 9, dadurch gekennzeichnet, daß in dem Schritt a) die Zielinformationen durch Sprache oder manuell eingegeben werden.

11. Verfahren nach Anspruch 9 oder 10, dadurch gekennzeichnet, daß in dem Schritt a₃) die Punktkoordinatendaten durch den Benutzer manuell oder durch Sprache eingegeben werden.

## Revendications

1. Système de navigation servant à assurer un guidage jusqu'à une destination le long d'une route, telle qu'actuellement choisie, qui comprend :
a) un moyen de mémorisation (3) servant à conserver une information cartographique concernant des données de coordonnées de points,
b) des moyens (11, 12, 12a, 13, 15) de définition de destination, servant à définir la destination,
c) un moyen (5) formant processeur de calcul, servant à faire des calculs pour assurer un guidage routier vers la destination établie par lesdits moyens de définition de destination,
caractérisé par :
d) un moyen de communication (4) servant à transmettre une information de destination d'entrée à un support de stockage externe situé à distance, séparé de l'appareil de navigation, et à recevoir des données de coordonnées de point de ladite destination en provenance dudit support de stockage externe,
dans lequel :
e) ledit moyen (5) formant processeur de calcul sert à fournir un guidage routier en fonction desdites données de coordonnées de point reçues.

2. Système de navigation selon la revendication 1, caractérisé en ce que ledit support de stockage externe est un support d'enregistrement destiné à stocker l'information de destination et les données de coordonnées de point correspondantes et à envoyer certaines données de coordonnées de point qui correspondent à l'information de destination lors de la réception de l'information de destination.

3. Système de navigation selon la revendication 2, caractérisé en ce que ledit support d'enregistrement est un centre d'informations.

4. Système de navigation selon la revendication 2, caractérisé en ce que ledit support d'enregistrement est un support d'enregistrement portable.

5. Système de navigation selon la revendication 4, caractérisé en ce que ledit support d'enregistrement portable est une carte de circuits intégrés ou une carte magnétique.

6. Système de navigation selon l'une quelconque des revendications 1 à 5, caractérisé en ce que lesdites données de coordonnées de point comprennent des coordonnées géographiques.

7. Système de navigation selon l'une quelconque des revendications 1 à 6, caractérisé en ce que lesdites coordonnées de point sont faites de codes abrégés desdites coordonnées.

8. Système de navigation selon l'une quelconque des revendications 1 à 7, caractérisé en ce qu'il comprend un écran d'entrée (80) servant à entrer lesdites données de coordonnées de point, lequel écran comporte au moins une touche (82, 83) servant à entrer la longitude et la latitude et une zone d'affichage (14) servant à indiquer la coordonnée de longitude Est et la coordonnée de latitude Nord entrées.

9. Procédé de guidage d'un usager à destination selon une route prédéterminée, comprenant les étapes consistant à :
a) entrer une information de destination dans un système de navigation,
b) assurer un guidage routier jusqu'à ladite destination avec ledit système de navigation, sur la base desdites données de coordonnées de point,
caractérisé en ce que, entre les étapes (a) et (b), on procède aux étapes suivantes :
a₁) transmission de ladite information de destination à un support de stockage externe situé à distance, séparé de l'appareil de navigation,
a₂) réception de données de coordonnées de point de ladite destination en provenance dudit support de stockage externe,
a₃) entrée desdites données de coordonnées de point dans ledit système de navigation par l'usager ou de manière automatique.

10. Procédé selon la revendication 9, caractérisé en ce que lors de l'étape (a), l'information de destination est entrée soit de manière vocale, soit de manière manuelle.

11. Procédé selon la revendication 9 ou 10, caractérisé en ce que lors de l'étape (a₃) les données de coordonnées de point sont entrées par l'usager, soit de manière vocale, soit de manière manuelle.
